# FASCICULE DE BREVET EUROPEEN

(11) **EP 3 526 294 B1**
(45) Date de publication et mention de la délivrance du brevet: **25.08.2021**
(21) Numéro de dépôt: 17793714.1
(22) Date de dépôt: 13.10.2017
(51) Int. Cl.: C09D 11/102, B41M 5/00, C09D 11/101

(54) **NOUVELLE ENCRE SOL-GEL DESTINÉE À L'IMPRESSION PAR SÉRIGRAPHIE**
NEUARTIGE SOL-GEL-TINTE FÜR SIEBDRUCK
NOVEL SOL-GEL INK FOR SCREEN PRINTING

(30) Priorité: 14.10.2016 FR 1659949
(43) Date de publication de la demande: 21.08.2019
(73) Titulaire: Etablissements Tiflex, 01450 Poncin (FR); Université Claude Bernard Lyon 1, 69100 Villeurbanne (FR); Centre National de la Recherche Scientifique, 75016 Paris (FR); Ecole Normale Supérieure de Lyon, 69007 Lyon (FR)
(72) Inventeur: CHATEAU, Denis, 69300 Caluire et Cuire (FR); GILLOT, Laurence, 01800 Meximieux (FR); HAU, Damien, 01000 Bourg en Bresse (FR); CHAPUT, Frédéric, 69100 Villeurbanne (FR); PAROLA, Stéphane, 69330 Jonage (FR)
(74) Mandataire: Agasse, Stéphane
(86) Numéro de dépôt international: PCT/FR2017/052825
(87) Numéro de publication internationale: WO 2018/069660

(56) Documents cités:
- WO-A2-02/50191
- WO-A2-2005/075485
- DE-A1- 19 946 712
- DE-A1-102011 050 872
- US-A1- 2015 125 687

## Description

La présente invention a pour objet une nouvelle encre destinée à l'impression par sérigraphie sur des supports standards, notamment sur du verre, ainsi qu'un procédé de préparation de ladite encre.

La sérigraphie est une technique d'imprimerie créée par les chinois au Xème siècle consistant à utiliser des pochoirs interposés entre l'encre et le support, lequel peut être varié et pas nécessairement plan.

De nos jours, la sérigraphie demeure très présente dans de nombreux produits du quotidien. Elle est ainsi utilisée pour préparer des produits aussi variés que les panneaux signalétiques, les autocollants, les CD, les affiches de concert, les vêtements ou la vaisselle. Cette technique peut être mise en œuvre sur des supports tels que le papier, le carton, le textile, le métal, le verre, le bois ou les circuits imprimés.

La sérigraphie est particulièrement utilisée pour les impressions sur verre, notamment dans le domaine de l'industrie alimentaire, des cosmétiques, de l'électroménager, des vitrages ou encore de la téléphonie. Il existe trois familles d'encres de sérigraphie de compositions chimiques différentes applicables sur verre :
- les émaux ;
- les encres à base de solvant de nature chimique époxy ou « encres époxy » ; et
- les encres à polymérisation UV.

Les émaux sont généralement réalisés à base de silice, d'oxydes de sodium, de calcium, de potassium ou d'alumine formant un mélange de poudre appelé « fritte ». Pour les couleurs, des oxydes de métaux de transition sont généralement utilisés. L'ensemble est mélangé à un liant organique et/ou un solvant assurant la liaison et l'imprimabilité. Une fois imprimés, les émaux sont cuits à une température comprise entre 500°C et 700°C durant laquelle le liant organique se décompose, la fritte fond et fusionne avec le verre en laissant apparaitre la « fritte colorée». La fritte peut en outre contenir des métaux lourds tels que le cadmium ou le plomb.
Les émaux permettent d'obtenir une encre présentant une adhésion, une dureté et une résistance mécanique et chimique satisfaisantes. Cependant, ces encres nécessitent des températures de cuisson élevées ce qui nuit à la rentabilité économique ainsi que l'adjonction de métaux lourds toxiques.

Les encres époxy sont des encres contenant des résines époxy, c'est-à-dire des époxy solides ou liquides de poids moléculaire compris entre 300 et 4000 g.mol⁻¹, produits par réaction d'épichlorhydrine avec le bisphénol. Ces résines sont connues pour leur résistance chimique, leur dureté, leur adhésion et leur souplesse. Dans les encres pour sérigraphie, des résines de « type 1 » de faible poids moléculaire (équivalent poids époxyde = 475-550 g/eq) et ayant un point de ramollissement d'environ 80°C sont préférentiellement utilisées. Elles peuvent être associées à des résines de poids moléculaire plus élevé (équivalent poids époxyde = 1600-1950 g/éq) possédant un point de ramollissement d'environ 130°C.
Ces résines sont généralement combinées avec des isocyanates ou des amines et réticulées à température ambiante ou à chaud (120°C à 180°C), formant un système à deux composants.
En outre, des durcisseurs sont ajoutés, notamment des adduits d'amine et d'époxy liquide, des polyamines, des polyamides, de l'imidazoline ou un aminosilane.
Les encres sont imprimées par sérigraphie de préférence en maille 90-120 fils/cm, et séchées à température ambiante ou à chaud en étuve à partir de 80°C jusqu'à 180°C pendant quelques minutes (5 à 30 minutes).
Ces encres possèdent de bonnes résistances chimiques et adhèrent bien au verre sans traitement préalable de surface.
Cependant, ces encres nécessitent l'incorporation d'un durcisseur et les résistances à l'abrasion restent faibles en comparaison des émaux. En outre, ces encres sont utilisées le plus souvent en impression mono-couleur du fait du temps de séchage long rendant difficile l'impression multi couleurs. Enfin, l'évaporation du solvant en cours de tirage entraine un bouchage de la maille d'écran et donc de nombreux arrêts en cours d'impression. Le nettoyage des écrans de sérigraphie s'imposent avant de redémarrer la production.

Les encres à polymérisation UV ont été développées dans le cadre du renforcement de la législation sur les rejets de solvants dans l'environnement et ont permis d'accélérer le processus de séchage. Ces encres contiennent des prépolymères, des monomères et un photoamorceur. Les photoamorceurs sont excités par les rayons ultra-violets et déclenchent une réaction de polymérisation en chaîne des prépolymères et des monomères. La réaction est complète et quasi instantanée. Le film d'encre n'a dès lors, normalement, aucune odeur résiduelle, ce qui est très appréciable pour les emballages alimentaires par exemple. En outre, ces encres possèdent de bonnes résistances chimiques.
Cependant, le film d'encre est aussi d'une grande solidité, ce qui pose des problèmes au désencrage. Elles sont en outre plus onéreuses que les encres « époxy », nécessitant l'utilisation d'un durcisseur. Enfin, elles possèdent des propriétés d'adhésion au support parfois insuffisantes.

En vue d'améliorer l'adhérence sur verre et la résistance à la rayure des encres existantes, que celles-ci soient imprimées sur du matériel en sérigraphie et séchées sous UV, par chauffage ou par combinaison des deux, l'utilisation de résine sol-gel (abréviation de « solution-gélification »), a été décrite.

Ainsi, la demande de brevet WO-A-2009/101401 décrit l'incorporation de silanes dans des encres afin d'améliorer l'adhésion. Néanmoins, les encres obtenues sont d'une faible viscosité et ne peuvent être utilisées en sérigraphie. En outre, l'utilisation de silanes implique l'émission de composés organiques volatils (COV) toxiques et inflammable lors du séchage. Enfin, l'adhérence sur verre et la résistance à la rayure des encres obtenues n'est pas encore totalement satisfaisante.

La demande de brevet WO-A-2004/022660 décrit quant à elle des encres préparées à partir de précurseurs de résine sol-gel hydrolysés et de dérivés de cellulose qui sont utilisables pour différentes impressions, notamment par sérigraphie. Cependant, les encres préparées et décrites dans le cadre de cette demande de brevet contiennent de grandes quantités (i.e. plus de 50%) de solvants (en particulier des alcools) dont les émissions au moment du séchage sont toxiques et inflammables. En outre, la présence de dérivés de cellulose dans la composition des encres préparées apparait indispensable.

La demande de brevet DE-A-19946712 décrit une composition pour l'impression sur des substrats, notamment du verre ou de la céramique, comprenant une résine sol-gel préhydrolysée choisie parmi les polymères organosiliconés, un solvant, et, optionnellement, un acide tel qu'un acide carboxylique. L'utilisation de polymères organométalliques comme résine sol-gel n'est cependant pas suggérée. En outre, la résine sol-gel utilisée ne contient pas à la fois un acide et une base.

De même, la demande de brevet internationale WO-A-02/50191 est une demande de brevet internationale ayant notamment pour objet une résine sol-gel pauvre en solvant et son utilisation comme additif dans les encres, ladite résine sol-gel étant susceptible d'être préparée à partir de polymères organométalliques en présence d'acide ou de base. Néanmoins, la quantité de résine sol-gel contenue dans les encres auxquelles elles sont éventuellement ajoutées comme additifs n'est pas stipulée. En outre, la présence simultanée d'un acide et d'une base dans la résine sol-gel n'est pas suggérée.

WO2005/075485 divulgue une encre comprenant: une résine sol-gel organosiloxane préhydrolysée, obtenue par hydrolyse-condensation du tetraéthoxysilane et de raminopropyltriméthoxysilane; de l'acide chlorhydrique pour l'hydrolyse; une quantité minimale d'eau; de l'éthanol résiduel de la distillation; et une amine secondaire. Cependant, ces encres ne donnent pas entière satisfaction en matière de tenue et de résistance dans le temps à température ambiante, notamment en termes d'adhésivité et de résistance à la rayure et aux agressions chimiques.

A ce jour, il demeure donc nécessaire d'identifier des compositions d'encre pouvant être utilisées en sérigraphie, présentant une stabilité dans le temps à température ambiante améliorée et une réactivité à chaud accrue, une adhérence et des propriétés de résistance à la rayure et aux agressions chimiques améliorées en comparaison des encres classiquement utilisées, et qui, lors du séchage, n'émettent pas ou très peu de substances toxiques ou susceptibles de s'enflammer.

Or, il a maintenant été trouvé de façon tout à fait surprenante que l'utilisation d'une résine sol-gel préhydrolysée préparée à partir d'un polymère organométallique et contenant à la fois un acide et une base permettait d'obtenir des encres présentant l'ensemble des caractéristiques précitées.

Ainsi, la présente invention a pour objet une encre pour impression par sérigraphie comprenant :
- de 1% à 90% de résine sol-gel choisie parmi les polymères organométalliques, ladite résine sol-gel étant préhydrolysée et contenant en outre un acide choisi parmi les béta-dikétones, les béta-kétoesters, les acides phosphoniques, les acides sulfoniques et les acides carboxyliques, et une base choisie parmi les amines secondaires ou tertiaires ; et
- moins de 25% de solvant.

Les encres selon la présente invention peuvent être utilisées en sérigraphie, notamment sur verre, présentent une stabilité dans le temps et à température ambiante améliorée et une réactivité à chaud accrue, une adhérence et des propriétés de résistance à la rayure et aux agressions chimiques améliorées en comparaison des encres classiquement utilisées, et n'émettent pas ou peu de substance toxique ou susceptible de s'enflammer lors de leur séchage.

Dans le cadre de la présente invention :
- on entend par « résine sol-gel préhydrolysée choisie parmi les polymères organométalliques » toute résine constituée majoritairement (plus de 50% en poids) d'un polymère organométallique ;
- on entend par « solvant » tout composé volatil non réactif ayant un point d'ébullition inférieur à 200°C susceptible de s'évaporer lors du séchage de l'encre, tels que l'eau ou les alcools, notamment le méthanol, l'éthanol, le 2-butanol ou le 1-méthoxy-2-propanol ;
- on entend par « polymère organométallique » tout polymère obtenu par hydrolyse-condensation d'un ou plusieurs précurseurs de métal et, optionnellement et d'un ou plusieurs alkoxysilane(s), y compris les alkoxydes mixtes métal/silicium. De préférence, le polymère organométallique est obtenu par hydrolyse-condensation d'un ou plusieurs précurseurs de métal et d'un ou plusieurs alkoxysilane(s) et est caractérisé par un taux d'hydrolyse supérieur à 0,33 ; de préférence par un taux d'hydrolyse variant de 0,5 à 1 ; préférentiellement encore par un taux d'hydrolyse variant de 0,85 à 1 ;
- on entend par « alkoxysilane » tout dérivé silane possédant au moins un groupe alkoxy tels que R¹⁻Si-(O-R²)₃ ou Si-(O-R¹)₄ dans lesquelles :
   - R¹ est choisi parmi C₁-C₁₀-alkyle, C₂-C₁₀-alkényle ou C₂-C₁₀-époxyalkyle, éventuellement substitué par un ou plusieurs substituants choisis indépendamment les uns des autres comme étant un groupe amino ;, mercapto ; acryloxy ; méthacryloxy ;hydroxy ; glycidoxy ; -N=C=O ; ou R^{a}-(C=O)-O-(C=O)-R^{b} dans lequel R^{a} et R^{b} sont choisis indépendamment l'un de l'autre comme étant un groupe Ci-Cio-alkyle ;
   - et R² est un Ci-Cio-alkyle, de préférence un groupement méthyle ou éthyle. De façon tout à fait préférée, « alkoxysilane » désigne le 3-methacryloxypropyltrimethoxysilane, le 3-methacryloxypropyltriethoxysilane, le 3-glycidyloxypropyltrimethoxysilane, le 3-glycidyloxypropyltriethoxysilane, le 3-mercaptopropyltrimethoxysilane, le 3-mercaptopropyltriethoxysilane, le 2-(3,4-époxycyclohexyl)éthyl]triéthoxysilane, le 2-(3,4-époxycyclohexyl)éthyl]triméthoxysilane, le vinyltriethoxysilane ou le vinyltrimethoxysilane ;
- on entend par « précurseur de métal » tout composé de formule M(R¹)ₙ(R²)ₘ(R³)ₚ dans laquelle :
   - M est un métal ou un métal de transition
   - R¹, R² et R³ sont choisis indépendamment les uns des autres parmi C₁-C₁₀-alkyle, C₁-C₁₀-alkoxy, C₁-C₁₀-alkyle-COOH, C₁-C₁₀-alkyle-(C=O)-CH₂-(C=O)-C₁-C₁₀-alkyle et C₁-C₁₀-alkyle-(C=O)-CH₂-(C=O)-O-C₁-C₁₀-alkyle, triéthoxysilyl, chloro ou hydroxy ; et
   - n, m et p sont des nombres entiers variant de 0 à 6 ;
      De préférence « précurseur de métal » désigne un alcoolate de formule M(R¹)ₙ ainsi que les carboxylates de formule générale M(OH)ₙ(C₁-C₁₀-alkyle-COOH)ₚ dans laquelle
   - M est choisi parmi les métaux ou les métaux de transition des groupes 4 et 13 du tableau périodique, notamment l'aluminium, le titane, l'indium, le gallium, le zirconium ou l'hafnium ; de préférence M est choisi comme étant l'aluminium ou le zirconium ;
   - R est choisi comme étant un groupe C₁-C₁₀-alkoxy ; de préférence encore un groupe propoxy, isopropoxy ou sec-butoxy ;
   - n est un nombre entier variant de 0 à 6 ; et
   - p est un nombre entier variant de 0 à 6.
   De façon tout à fait préférée, « précurseur de métal » désigne le propoxyde de zirconium, l'isopropoxyde d'aluminium, le sec-butoxyde d'aluminium ou l'acétate dibasique d'aluminium ;
- on entend par « Cₓ-C_{y}-alkyle », une chaîne hydrocarbonée saturée, linéaire ou ramifiée, et comportant de x à y atomes de carbone ;
- on entend par « Cx-Cy-alkényle », une chaîne hydrocarbonée insaturée, linéaire ou ramifiée, contenant au moins une double liaison, et comportant de x à y atomes de carbone ;
- on entend par « Cx-Cy-alkoxy », un groupe -O-(Cx-Cy-alkyle) ;
- on entend par « Cₓ-C_{y}-époxyalkyle », une chaîne hydrocarbonée saturée, linéaire ou ramifiée, comportant de x à y atomes de carbone et au moins une fonction époxy ;
- on entend par « taux d'hydrolyse » le taux de fonctions alkoxy initialement présentes dans un composé finalement hydrolysées ; et
- on entend par « teneur en matière sèche » le rapport entre la masse de résine solide obtenue par chauffage à 165°C et la masse de résine initiale

De plus, dans le cadre de la présente invention, sauf mention contraire, les proportions exprimées en % correspondent à des pourcentages massiques par rapport au poids total de l'entité considérée.

La présente invention a donc pour objet une encre pour impression par sérigraphie comprenant de 1% à 90% de résine sol-gel choisie parmi les polymères organométalliques, ladite résine sol-gel étant préhydrolysée et contenant en outre un acide et une base tels que définis précédemment, et moins de 25% de solvant. De préférence, la présente invention a pour objet une encre telle que définie précédemment présentant les caractéristiques suivantes, prises seules ou en combinaison :
- l'encre contient de 5% à 70%, de préférence de 10% à 50%, de résine sol-gel préhydrolysée telle que définie précédemment ;
- la résine sol-gel préhydrolysée possède une viscosité variant de 0,01 Pa.s à 10 Pa.s, de préférence de 0,05 Pa.s à 5 Pa.s ;
- la teneur en matière sèche de la résine sol-gel préhydrolysée varie de 50% à 99%, de préférence de 60% à 90% ;
- l'acide contenu dans la résine sol-gel préhydrolysée est choisi parmi les acides carboxyliques. De préférence encore, l'acide contenu dans la résine sol-gel préhydrolysée est choisi parmi l'acide formique, l'acide acétique, l'acide glycolique, l'acide chloroacétique, l'acide acrylique, l'acide méthacrylique, l'acide propanoïque, l'acide lactique, l'acide glyoxylique, l'acide malonique, l'acide malique, l'acide maléique, l'acide 3-acryloyloxypropionique, l'acide succinique, l'acide citrique, l'acide acétonedicarboxylique, l'acide citraconique, l'acide salicylique, l'acide mandélique et l'acide phénylglyoxylique ;
- la résine sol-gel préhydrolysée contient de 0,25% à 15% d'acide, de préférence encore de 0,5% à 8% d'acide ;
- la base contenue dans la résine sol-gel préhydrolysée est choisie parmi les amines tertiaires. De préférence encore, la base contenue dans la résine sol-gel préhydrolysée est choisie parmi les amines tertiaires contenant moins de 10 atomes de carbone. De façon tout à fait préférée, la base contenue dans la résine sol-gel préhydrolysée est choisi parmi la diméthylamine, la triméthylamine, la diéthylamine, la triéthylamine, la diéthanolamine, la triéthanolamine, la diisopropylamine, la diisopropyléthylamine, la tripropylamine, la tris(hydroxyméthyl)amine, la dibutylamine et la phényléthanolamine ;
- la résine sol-gel préhydrolysée contient de 0,5% à 15% de base, de préférence encore de 1% à 10% de base ;
- l'acide et la base sont présents dans la résine sol-gel dans un ratio molaire acide:base variant de 15:85 à 85:15, de préférence encore dans un ratio acide:base variant de 30:70 à 70:30 ;
- l'encre contient moins de 20% de solvant, de préférence moins de 15% de solvant, de façon tout à fait préférée moins de 10% de solvant ;
- l'encre contient un ou plusieurs pigments, notamment des pigments disponibles commercialement sous le nom de Paliotol®, Irgazine®, Novoperm®, Hostaperm® ou Lutetia® ; ainsi que des pigments fluorescents, à base d'aluminium, de bronze ou de nature minérale Ces pigments peuvent être classés selon leur index coloré, par exemple Jaune C.I.83, Jaune C.1.12, Orange C.I.36, Bleu C.I.15:3, Vert C.I.7, Noir C.I.7 ou Violet C.I.19 ;
- l'encre contient un ou plusieurs dispersants destinés à maintenir le pigment en suspension dans l'encre et à assurer la stabilité lors du stockage, notamment les polyacrylates ou les polyuréthanes de faible ou haut poids moléculaire tels que la série Dispers® de Tego, la gamme Disperbyk® de Byk ou la gamme Efka® de BASF ;
- l'encre contient en outre une résine « non sol-gel » ou un monomère ayant une ou plusieurs fonctions époxy, acrylates, méthacrylate, vinyl, vinyloxy, hydroxy, thiol, isocyanate bloqué, acide et/ou anhydride d'acide. La résine est préférentiellement choisie comme étant un acrylate, un époxy acrylate, un uréthane acrylate ou un hydroxy uréthane acrylate de poids moléculaire 500 Da à 5000 Da, dont la fonctionnalité, qui détermine le degré de réticulation, varie de 1 à 6. Comme exemples de telles résines on peut notamment citer les produits de la gamme Ebecryl® (ALLNEX), Sartomer® (Arkema), Laromer® (BASF), Genomer® (Rahn). Les monomères sont préférentiellement choisis parmi les acrylates et hydroxy acrylates aliphatiques et alicycliques et dont la fonctionnalité (qui détermine le degré de réticulation) varie de 1 à 6. Des exemples de monomères typiquement utilisés sont l'isobornyle acrylate, le phénoxyéthyle acrylate, le tétrahydrofurfuryle acrylate, le tricyclodécyl diacrylate, le dipropylèneglycol diacrylate, le tripropylèneglycol diacrylate, l'hexanediol diacrylate, le triméthylolpropane triacrylate, le pentaérithritol triacrylate, le pentaérithritol tétraacrylate, le dipentaérithritol pentaacrylate, le dipentaérithritol hexaacrylate ou le 4-hydroxybutylacrylate;
- l'encre contient en outre des agents durcissants tels que des isocyanates, bloqués ou non, ou des amines, notamment les isocyanates aliphatiques, alicycliques, cycloaliphatiques, hétérocycliques ou les isocyanates mono- ou polyaromatiques tels que le toluène diisocyanate, l'isophorone diisocyanate ou l'hexamethylene diisocyanate ;
- l'encre contient un acide ou une base photolatente ou non, notamment les dérivés de type aryl iodonium tels que l'IRGAURE® 250 (BASF) ou aryl sulfonium tels que l'IRGAUCRE® 270 (BASF), ou les dérivés de la N-méthylnifédipine, des tétraphénylborates, de l'acide trans-o-courmarique, de l'acide thioxanthone acetique, ou des phénylglyoxylates, tels que le phénylglyoxylate de tetraméthylguanidinium ;
- l'encre contient des initiateurs de polymérisation radicalaire thermiques tels des peroxydes, organiques ou non, ou des dérivés « azo » instables thermiquement ; notamment l'azobisisobutyronitrile (AIBN), le peroxyde de benzoyle, le peroxybenzoate de tert-butyle (Luperox P) ou le persulfate de potassium ;
- l'encre contient des agents de tension et/ou anti-mousse, notamment les polymethylsiloxanes ou les polybutylacrylates ;
- l'encre contient des modificateurs de rhéologie tels que des silices de type Aerosil et/ou des charges minérales telles que le carbonate de calcium, la bentonite ou le sulfate de baryum ; et/ou
- l'encre contient un ou plusieurs photo-initiateurs qui initient la polymérisation des monomères et résines sous irradiation UV tels que Irgacure®, Darocure® (de BASF), la gamme Esacure® (de Lamberti) ou la gamme Genocure® (de Rahn).

L'encre selon la présente invention peut être préparée selon toute méthode connue de l'homme du métier. A titre d'exemple, on peut notamment citer un procédé de préparation d'une encre telle que définie précédemment, comprenant les étapes suivantes :
- dispersion du pigment dans une résine non sol-gel ou un solvant, éventuellement en présence d'un agent dispersant et/ou additifs tels que des agents de tension, stabilisants, agents rhéologiques ;
- broyage ; et
- ajout de résine sol-gel et d'autres additifs non incorporés avant broyage tels que des photoinitiateurs ou des agents durcissants.
La résine sol-gel peut éventuellement être introduite lors de la dispersion du pigment. Préférentiellement, la résine est néanmoins introduite en fin de procédé afin de maximiser ses performances.

L'encre selon la présente invention peut donc être utilisée dans le cadre de l'impression par sérigraphie sur des supports standard comme le verre et les céramiques, mais également les métaux.
Le support d'impression peut éventuellement être traité au préalable afin d'améliorer l'adhésion. Parmi les exemples de tels traitements, on peut notamment citer le flammage du support en verre, avec ou sans agent silanisant tel le tetraéthoxysilane. En outre, un catalyseur ou un agent de réticulation peut également être rajouté dans l'encre juste avant l'impression. L'encre est alors dite « bi-composant ». Les catalyseurs peuvent être des dérivés de titane, aluminium, zirconium ou de bore, des composés basiques ou acides, des peroxydes organiques ou non, ainsi que des composés fluorés. Les agents de réticulation peuvent être des composés thiolés, aminés, acides carboxyliques et anhydrides d'acides.
Selon la composition de l'encre, un séchage par chauffage ou sous UV pourra être envisagé.
Après l'impression, une étape de cuisson de l'encre peut s'avérer nécessaire. Dans ce cas, une cuisson entre 120°C et 200°C pendant 10 à 60 minutes afin de permettre l'activation des réactifs thermosensibles sera préférée.

Enfin, bien que l'encre selon la présente invention soit essentiellement destinée à l'impression par sérigraphie, elles peuvent également être utilisées dans le cadre d'impression jet d'encre, notamment sur verre.

La présente invention est illustrée de manière non limitative par les exemples suivants.

### Exemple 1 - Fabrication d'une résine sol-gel (résine n°1 - résine sol-gel simple)

Dans un ballon de 250ml contenant 100g de 3-glycidoxypropyltrimethoxysilane sous agitation, sont ajoutés goutte à goutte en 15 minutes 22,8 ml d'eau contenant 0,01 M d'acide chlorhydrique.

A la fin de l'ajout, l'agitation est maintenue pendant une nuit, puis le ballon est évaporé pendant 15 minutes à l'évaporateur rotatif (température du bain à 30-35°C).

La résine restant au fond du ballon est alors stockée à 4°C.

Le temps de gélification de la résine à 4°C est supérieur à 12 mois.

L'extrait sec après 20h à 165°C de la résine est d'environ 78%.

### Exemple 2- Fabrication d'une résine sol-gel (résine n°2 - résine sol-gel avec aluminium et acide)

Dans un ballon schlenck de 250 ml équipé d'un barreau magnétique et sous atmosphère d'azote, sont introduits 100 g de 3-glycidoxypropyltrimethoxysilane et 4,8 g de 1-méthoxy-2-propanol, suivi de 10,4 g de sec-butoxyde d'aluminium. Après 5 minutes d'agitation, un bain d'eau froide est placé autour du ballon et ce dernier est surmonté d'une ampoule de coulée afin d'introduire 6 ml d'acide acétique en 10 minutes environ. La température ne doit pas excéder 40°C.

Dix minutes après la fin de l'addition de l'acide acétique, 25,1 ml d'eau MilliQ sont alors introduits rapidement sous forte agitation.

Après 20h d'agitation, le contenu du ballon est évaporé pendant 25 minutes à l'évaporateur rotatif (température du bain à 30-35°C).

On obtient alors une résine visqueuse incolore, qui est stockée à 4°C ou plus préférentiellement à -24°C.

Le temps de gélification de la résine est d'environ 20-30 jours à 4°C, et plus de 12 mois à -24°C.

L'extrait sec après 20h à 165°C de la résine est d'environ 81%.

### Exemple 3 - Fabrication d'une résine sol-gel (résine n°3 - résine sol-gel avec aluminium, acide et base)

Dans un ballon schlenck de 250 ml équipé d'un barreau magnétique et sous atmosphère d'azote, sont introduits 100 g de 3-glycidoxypropyltrimethoxysilane et 4,8 g de 1-méthoxy-2-propanol, suivi de 10,4 g de sec-butoxyde d'aluminium. Après 5 minutes d'agitation, un bain d'eau froide est placé autour du ballon et ce dernier est surmonté d'une ampoule de coulée afin d'introduire 2,6 g d'acide acétique en 5 minutes environ. La température ne doit pas excéder 40°C.

Dix minutes après la fin de l'addition de l'acide acétique, 4,3g de triéthylamine sont ajoutés, puis dix minutes après, 25,1 ml d'eau MilliQ. sont alors introduits rapidement sous forte agitation. Après 20h d'agitation, le contenu du ballon est évaporé pendant 25 minutes à l'évaporateur rotatif (température du bain à 30-35°C).

On obtient alors une résine visqueuse incolore, qui est stockée à 4°C ou plus préférentiellement à -24°C.

Le temps de gélification de la résine est supérieur à 120 jours à 4°C, et supérieur à 12 mois à -24°C.

L'extrait sec après 20h à 165°C de la résine est d'environ 80%.

### Exemple 4 - Fabrication d'une résine sol-gel (résine n°4 - résine sol-gel photosensible avec aluminium, acide et base)

Dans un ballon schlenck de 250 ml équipé d'un barreau magnétique et sous atmosphère d'azote, sont introduits 83 g de 3-glycidoxypropyltrimethoxysilane, 17,9 g de 3-methacryloxypropyltriméthoxysilane et 4,8 g de 1-méthoxy-2-propanol, suivi de 10,4 g de sec-butoxyde d'aluminium.

La suite de la procédure est identique à celle décrite dans l'exemple 3.

Le temps de gélification de la résine est supérieur à 120 jours à 4°C, et supérieur à 12 mois à -24°C.

L'extrait sec après 20h à 165°C de la résine est d'environ 80%.

### Exemple 5 - Fabrication d'une résine sol-gel (résine n°5 - résine sol-gel avec aluminium et base uniquement)

La procédure est identique à celle décrite dans l'exemple n°3 à l'exception du fait que l'acide acétique n'est pas introduit. Le reste du protocole est inchangé.

Le temps de gélification de la résine est d'environ 60 jours à 4°C, et plus de 12 mois à - 24°C.

L'extrait sec après 20h à 165°C de la résine est d'environ 83%.

### Exemple 6- Encre d'impression selon l'invention

Une encre jaune de sérigraphie destinée à l'impression sur verre est préparée en mélangeant 160g d'encre UVGL commercialisée par la société Tiflex avec 40 g de la résine sol-gel de l'exemple 3 à l'aide d'un mélangeur (1500 rpm) pendant 5 minutes.

L'encre ainsi obtenue a une viscosité d'environ 3 Pa.s.

L'encre est ensuite stockée dans un pot en polypropylène noir à 4°C.

### Exemple 7 - Encre d'impression n°2 selon l'invention

Comme dans l'exemple 6, une encre jaune de sérigraphie destinée à l'impression sur verre est préparée en mélangeant 160g d'encre UVGL commercialisée par la société Tiflex avec 40g de la résine sol-gel de l'exemple 4 à l'aide d'un mélangeur (1500 rpm) pendant 5 minutes.

L'encre ainsi obtenue a une viscosité d'environ 3 Pa.s.

L'encre est ensuite stockée dans un pot en polypropylène noir à 4°C.

### Exemple 8 - Test d'impression

Les encres obtenues dans les exemples 6 et 7 précédents sont imprimées sur des plaques de verre nues, à l'aide d'un écran de maille 150 fils/cm puis séchée sous un banc UV équipé de lampes à mercure moyenne pression d'une puissance de 200W/cm à une vitesse de 15m/min.

L'encre est ensuite cuite à 165°C durant 30 minutes.

La dureté mesurée au scléromètre est de 8N pour les deux encres.

Un essai de quadrillage suivant la norme ISO 2409:2007 indique une très bonne adhésion de l'encre sur le verre (aucun manque).

La résistance chimique et l'adhérence à long terme des encres ont été évaluées selon le test de la norme NF EN 12875-5 avec succès.

### Exemple 9 - Comparaison avec des encres commerciales

Les encres des exemples 6 et 7 ont été comparées sur verre nu à d'autres encres commerciales prévues pour l'impression sur verre.

Le tableau 1 ci-dessous récapitule les résultats obtenus.

**Tableau 1 - Résultats des essais comparatifs aux encres commerciales**

| | **Tiflex® UVGL (référence)** | **Exemple n°6** | **Exemple n°7** | **Marabu® Ultraglass UVGO** | **Marabu® Ultraglass UVGO** | **Marabu® Ultraglass UVGL** | **Tiflex® Epoxy EV** |
|---|---|---|---|---|---|---|---|
| **Additifs** | Aucun | Aucun | Aucun | 2% Marabu® UV-HV8 | 2% Marabu® UV-HV8 | 2% Marabu® UV-HV8 | 5% Dynasylan® AMEO |
| **Ecran (nombre de fils/cm)** | 150 | 150 | 150 | 150 | 150 | 150 | 120 |
| **Séchage UV** | 200W/cm à une vitesse de 15m/min | | | | | | Aucun |
| **Traitement thermique** | 165°C 30min | 165°C 30min | 165°C 30min | 160°C 20min | 165°C 30min | 48h à 25°C | 165°C 30min |
| **Tendu** | Mauvais | Bon | Bon | Bon | Bon | Bon | Bon |
| **Brillance** | Bonne | Moyenne | Bonne | Bonne | Moyenne | Bonne | Bonne |
| **Dureté** | 4-5N | 7-9N | 7-9N | 3-4N | 3-5N | 3-4N | 4-5 |
| **Test bain 50°C 96h** | Ne résiste pas | OK | OK | OK | OK | OK | OK |

| Résultats à l'issue **du** test **NF EN** 12875-5 | | | | | | | |
|---|---|---|---|---|---|---|---|
| **Adhésion** | Aucune | Très bonne | Très bonne | Très bonne | Très bonne | Très bonne | Très bonne |
| **Brillance** | - | Moyenne | Bonne | Moyenne | Moyenne | Moyenne | Bonne |

La dureté a été mesurée à l'aide d'un scléromètre Elcometer 3092.

Le tendu (rugosité la plus faible possible) du film imprimé ainsi que sa brillance sont purement qualitatives.

Le test du bain, consiste à immerger la plaque de verre dans un bain thermostaté à 50°C pendant 96h afin de voir si le film imprimé se décolle ou non de la plaque de verre.

Par rapport aux autres encres commerciales (gamme Marabu® et Tiflex® Epoxy EV), les encres selon la présente invention (encres 6 et 7) présentent des performances similaires en termes d'adhésion et largement supérieures en termes de dureté.

En outre, en comparaison de l'encre Tiflex® UVGL (dont les encres 6 et 7 sont tirées par addition de la résine sol-gel selon l'invention), on observe une amélioration significative des performances termes de dureté, d'adhérence et de brillance pour les encres selon la présente invention.

### Exemple 10 - Comparaison avec des encres préparées avec les résines 1, 2, 3 et 5

Comme dans l'exemple 6, les résines des exemples 1, 2 ,3 et 5 sont intégrées dans une encre d'impression : pour chaque résine, une encre jaune de sérigraphie destinée à l'impression sur verre est préparée en mélangeant 160g d'encre UVGL commercialisée par la société Tiflex avec 40 g de la résine sol-gel à comparer à l'aide d'un mélangeur (1500 rpm) pendant 5 minutes.

Les encres obtenues sont alors imprimées sur des plaques de verre nues, à l'aide d'un écran de maille 150 fils/cm puis séchées sous un banc UV équipé de lampes à mercure moyenne pression d'une puissance de 200W/cm à une vitesse de 15m/min, puis cuites à 165°C durant 30 minutes.

Les performances de chacune de ces encres sont évaluées selon les mêmes critères que l'exemple 9.

Les résultats sont présentés dans le tableau 2 ci-dessous.

**Tableau 2 : résultats des essais comparatifs entre les résines.**

| **Résine utilisée dans l'encre** | **Résine n°3** | **Résine n°1** | **Résine n°2** | **Résine n°5** |
|---|---|---|---|---|
| **Tendu** | Bon | Bon | Bon | Bon |
| **Brillance** | Moyenne | Mauvaise | Moyenne | Moyenne |
| **Dureté** | 7-9N | <3N | 6-7N | 5-6N |
| **Test bain 50°C 96h** | OK | Ne résiste pas | OK | OK |

| **Résultats à l'issue du test NF EN 12875-5** | | | | |
|---|---|---|---|---|
| **Adhésion** | Très bonne | Aucune | Aucune | Moyenne |
| **Brillance** | Moyenne | - | - | Moyenne |

Les résultats montrent que seule l'encre préparée à partir de la résine n°3 (qui contient à la fois un acide - l'acide acétique - et une base - la triéthylamine) présente de très bonnes performances en termes de dureté et d'adhésion. Il s'agit en outre d'une formulation très stable au stockage (voir l'exemple 3).

La résine n°1 est extrêmement stable au stockage (voir l'exemple 1) mais ne contient ni métal de transition, ni acide, ni base, et de ce fait, ne durcit quasiment pas lors de la cuisson, ce qui se traduit par de mauvaises propriétés de l'encre préparée à partir de cette résine en termes de dureté et d'adhésion.

L'encre préparée à partir de la résine n°2 (qui ne contient pas de base) est moins dure que l'encre préparée à partir de la résine n°3. L'adhésion est également en retrait comme le montre le test NF EN 12875-5. La stabilité à 4°C est également compromise.

De même, l'encre préparée à partir de la résine n°5 (qui ne contient pas d'acide) est moins dure et moins adhérente que l'encre préparée à partir de la résine n°3.

## Revendications

1. Encre pour impression par sérigraphie comprenant :
- de 1% à 90% (p/p) de résine sol-gel choisie parmi les polymères organométalliques obtenus par hydrolyse-condensation :
• d'un ou plusieurs précurseurs de métal de formule M(R¹)ₙ(R²)ₘ(R³)ₚ dans laquelle :
∘ M est un métal ou un métal de transition ;
∘ R¹, R² et R³ sont choisis indépendamment les uns des autres parmi C₁-C₁₀-alkyle, C₁-C₁₀-alkoxy, C₁-C₁₀-alkyle-COOH, C₁-C₁₀-alkyle-(C=O)-CH₂-(C=O)-C₁-C₁₀-alkyle et C₁-C₁₀-alkyle-(C=O)-CH₂-(C=O)-O-C₁-C₁₀-alkyle, triéthoxysilyl, chloro ou hydroxy ; et
∘ n, m et p sont des nombres entiers variant de 0 à 6 ;
• et, optionnellement, d'un ou plusieurs alkoxysilane(s) ;
ladite résine sol-gel étant préhydrolysée et contenant en outre un acide choisi parmi les béta-dikétones, les béta-kétoesters, les acides phosphoniques, les acides sulfoniques et les acides carboxyliques, et une base choisie parmi les amines secondaires ou tertiaires ; et
- moins de 25% (p/p) de solvant.

2. Encre selon la revendication 1, **caractérisée en ce que** le polymère organométallique est obtenu par hydrolyse-condensation d'un ou plusieurs précurseur(s) de métal choisi(s) parmi le propoxyde de zirconium, l'isopropoxyde d'aluminium, le sec-butoxyde d'aluminium et l'acétate dibasique d'aluminium et, optionnellement, et d'un ou plusieurs alkoxysilane(s) choisi(s) parmi le 3-methacryloxypropyltrimethoxysilane, le 3-methacryloxypropyltriethoxysilane, le 3-glycidyloxypropyltrimethoxysilane, le 3-glycidyloxypropyltriethoxysilane, le 3-mercaptopropyltrimethoxysilane, le 3-mercaptopropyltriethoxysilane, le 2-(3,4-époxycyclohexyl)éthyl]triéthoxysilane, le 2-(3,4-époxycyclohexyl)éthyl]triméthoxysilane, le vinyltriethoxysilane et le vinyltrimethoxysilane.

3. Encre selon la revendication 1 ou 2, **caractérisée en ce qu'**elle contient de 5% (p/p) à 70% (p/p) de résine sol-gel préhydrolysée.

4. Encre selon l'une quelconque des revendications 1 à 3, **caractérisée en ce que** l'acide contenu dans la résine sol-gel préhydrolysée est choisi parmi les acides carboxyliques.

5. Encre selon la revendication 4, **caractérisée en ce que** l'acide contenu dans la résine sol-gel préhydrolysée est choisi parmi l'acide formique, l'acide acétique, l'acide glycolique, l'acide chloroacétique, l'acide acrylique, l'acide méthacrylique, l'acide propanoïque, l'acide lactique, l'acide glyoxylique, l'acide malonique, l'acide malique, l'acide maléique, l'acide 3-acryloyloxypropionique, l'acide succinique, l'acide citrique, l'acide acétonedicarboxylique, l'acide citraconique, l'acide salicylique, l'acide mandélique et l'acide phénylglyoxylique.

6. Encre selon l'une quelconque des revendications 1 à 5, **caractérisée en ce que** la résine sol-gel préhydrolysée contient de 0,25% (p/p) à 15% (p/p) d'acide.

7. Encre selon l'une quelconque des revendications 1 à 6, **caractérisée en ce que** la base contenue dans la résine sol-gel préhydrolysée est choisie parmi les amines tertiaires.

8. Encre selon la revendication 7, **caractérisée en ce que** la base contenue dans la résine sol-gel préhydrolysée est choisi parmi la diméthylamine, la triméthylamine, la diéthylamine, la triéthylamine, la diéthanolamine, la triéthanolamine, la diisopropylamine, la diisopropyléthylamine, la tripropylamine, la tris(hydroxyméthyl)amine, la dibutylamine et la phényléthanolamine.

9. Encre selon l'une quelconque des revendications 1 à 8, **caractérisée en ce que** la résine sol-gel préhydrolysée contient de 0,5% (p/p) à 15% (p/p) de base.

10. Encre selon l'une quelconque des revendications 1 à 9, **caractérisée en ce que** l'acide et la base sont présents dans la résine sol-gel dans un ratio molaireacide:base variant de 15:85 à 85:15.

11. Encre selon l'une quelconque des revendications 1 à 10, **caractérisée en ce qu'**elle contient moins de 20% (p/p) de solvant.

12. Encre selon l'une quelconque des revendications 1 à 11, **caractérisée en ce qu'**elle contient en outre un ou plusieurs dispersants choisi(s) parmi les polyacrylates ou les polyuréthanes.

13. Encre selon l'une quelconque des revendications 1 à 12, **caractérisée en ce qu'**elle contient en outre une résine ou monomère ayant une ou plusieurs fonctions époxy, acrylates, méthacrylate, vinyl, vinyloxy, hydroxy, thiol, isocyanate bloqué, acide et/ou anhydride d'acide.

14. Encre selon l'une quelconque des revendications 1 à 13, **caractérisée en ce qu'**elle contient en outre un ou plusieurs photo-initiateurs.

15. Utilisation d'une encre selon l'une quelconque des revendications 1 à 14 dans le cadre de l'impression par sérigraphie sur du verre, de la céramique ou du métal.

## Patentansprüche

1. Tinte für Siebdruck, Folgendes umfassend:
- von 1 % bis 90 % (p/p) Sol-Gel-Harz, ausgewählt aus den organometallischen Polymeren, die durch Hydrolyse-Kondensation erhalten werden:
• aus einem oder mehreren Vorprodukten aus Metall der Formel M(R¹)ₙ(R²)ₘ(R³)ₚ bei denen:
° M ein Metall oder ein Übergangsmetall ist;
° R¹, R² und R³ unabhängig voneinander ausgewählt sind aus C₁-C₁₀-Alkyl, C₁-C₁₀-Alkoxy, C₁-C₁₀-Alkyl-COOH, C₁-C₁₀-Alkyl-(C=O)-CH₂-(C=O)-C₁-C₁₀-Alkyl und C₁-C₁₀-Alkyl-(C=O)-CH₂-(C=O)-O-C₁-C₁₀-Alkyl, Triethoxysilyl, Chlor oder Hydroxy; und
° n, m und p ganze Zahlen sind, die von 0 bis 6 variieren;
• und optional aus einem oder mehreren Alkoxysilan(en);
wobei das Sol-Gel-Harz vorhydrolysiert ist und weiter eine Säure enthält, die aus den Beta-Diketonen, den Beta-Ketoestern, Phosphonsäuren, Sulfonsäuren und den Carbonsäuren ausgewählt sind, und eine Base, die aus den Sekundär- oder Tertiäraminen ausgewählt ist; und
- weniger als 25 % (p/p) an Lösungsmittel.

2. Tinte nach Anspruch 1, **dadurch gekennzeichnet, dass** das organometallische Polymer durch Hydrolyse-Kondensation eines oder mehrerer Vorprodukte aus Metall erhalten wird, das (die) ausgewählt ist (sind) aus Zirkoniumpropoxid, Aluminiumisopropoxid, Aluminiumsecbutoxid, zweibasigem Aluminiumacetat, und optional aus einem oder mehreren Alkoxysilan(en), ausgewählt aus 3-Methacryloxypropyltrimethoxysilan, 3-Methacryloxypropyltriethoxysilan, 3-Glycidyloxypropyltrimethoxysilan, 3-Glycidyloxypropyltriethoxysilan, 3-Mercaptopropyltrimethoxysilan, 3-Mercaptopropyltriethoxysilan, 2-(3,4-Epoxycyclohexyl)ethyl]triethoxysilan, 2-(3,4-Epoxycyclohexyl)ethyl]trimethoxysilan, Vinyltriethoxysilan und Vinyltrimethoxysilan.

3. Tinte nach Anspruch 1 oder 2, **dadurch gekennzeichnet, dass** sie von 5 % (p/p) bis 70 % (p/p) an vorhydrolysiertem Sol-Gel-Harz enthält.

4. Tinte nach einem der Ansprüche 1 bis 3, **dadurch gekennzeichnet, dass** die in dem vorhydrolysierten Sol-Gel-Harz enthaltene Säure aus den Carbonsäuren ausgewählt ist.

5. Tinte nach Anspruch 4, **dadurch gekennzeichnet, dass** die in dem vorhydrolysierten Sol-Gel-Harz enthaltene Säure aus Ameisensäure, Essigsäure, Glykolsäure, Chloressigsäure, Acrylsäure, Methacrylsäure, Propionsäure, Milchsäure, Glyoxylsäure, Malonsäure, Apfelsäure, Maleinsäure, 3-Acryloyloxypropionsäure, Bernsteinsäure, Zitronensäure, Acetondicarbonsäure, Citraconsäure, Salizylsäure, Mandelsäure und Phenylglyxoylsäure ausgewählt ist.

6. Tinte nach einem der Ansprüche 1 bis 5, **dadurch gekennzeichnet, dass** das vorhydrolysierte Sol-Gel-Harz von 0,25 % (p/p) bis 15 % (p/p) an Säure enthält.

7. Tinte nach einem der Ansprüche 1 bis 6, **dadurch gekennzeichnet, dass** die in dem vorhydrolysierten Sol-Gel-Harz enthaltene Base aus den Tertiäraminien ausgewählt ist.

8. Tinte nach Anspruch 7, **dadurch gekennzeichnet, dass** die in dem vorhydrolysierten Sol-Gel-Harz enthaltene Base aus Dimethyalmin, Trimethylamin, Diethylamin, Triethylamin, Diethanolamin, Triethanolamin, Diisopropylamin, Diisopropylethylamin, Tripropylamin, Tris(hydroxymethyl)amin, Dibutylamin und Phenylethanolamin ausgewählt ist.

9. Tinte nach einem der Ansprüche 1 bis 8, **dadurch gekennzeichnet, dass** das vorhydrolysierte Sol-Gel-Harz von 0,5 % (p/p) bis 15 % (p/p) einer Base enthält.

10. Tinte nach einem der Ansprüche 1 bis 9, **dadurch gekennzeichnet, dass** die Säure und die Base in dem Sol-Gel-Harz in einem Säure:Base Molverhältnis vorhanden sind, das von 15:85 bis 85:15 variiert.

11. Tinte nach einem der Ansprüche 1 bis 10, **dadurch gekennzeichnet, dass** sie weniger als 20 % (p/p) an Lösungsmittel enthält.

12. Tinte nach einem der Ansprüche 1 bis 11, **dadurch gekennzeichnet, dass** sie weiter ein oder mehrere Dispergiermittel enthält, das (die) aus den Polyacrylaten oder den Polyurethanen ausgewählt ist (sind).

13. Tinte nach einem der Ansprüche 1 bis 12, **dadurch gekennzeichnet, dass** sie weiter ein Harz oder Monomer enthält, das eine oder mehrere Epoxy-, Acrylat-, Methacrylat-, Vinyl-, Vinyloxy-, Hydroxy-, Thio-, blockierte Isocyanat-, Säure- und/oder Säureanhydrid-Funktionen aufweist.

14. Tinte nach einem der Ansprüche 1 bis 13, **dadurch gekennzeichnet, dass** sie weiter einen oder mehrere Photoinitiatoren enthält.

15. Verwendung einer Tinte nach einem der Ansprüche 1 bis 14, im Rahmen des Siebdrucks auf Glas, Keramik oder Metall.

## Claims

1. An Ink for screen printing comprising:
- from 1% to 90% (w/w) of sol-gel resin selected from organometallic polymers obtained by hydrolysis-condensation:
• of one or several metal precursor(s) of formula M(R¹)ₙ(R²)ₘ(R³)ₚ in which:
∘ M is a metal or a transition metal;
∘ R¹, R² and R³ are chosen independently of each other as being C₁-C₁₀-alkyl, C₁-C₁₀-alkoxy, C₁-C₁₀-alkyl-COOH, C₁-C₁₀-alkyl-(C=O)-CH₂-(C=O)-C₁-C₁₀-alkyl and C₁-C₁₀-alkyl-(C=O)-CH₂-(C=O)-O-C₁-C₁₀-alkyl, triethoxysilyl, chloro or hydroxy; and
∘ n, m and p are integers varying from 0 to 6;
• and, optionally, of one or several alkoxysilane(s);
said sol-gel resin being prehydrolysed and further containing an acid selected from beta-diketones, beta-ketoesters, phosphonic acids, sulfonic acids and carboxylic acids, and a base selected from secondary or tertiary amines; and
- less than 25% (w/w) of solvent.

2. The ink according to claim 1, **characterised in that** the organometallic polymer is obtained by hydrolysis-condensation of one or several metal precursor(s) selected from zirconium propoxide, aluminum isopropoxide, aluminum sec-butoxide and dibasic aluminum acetate and, optionally, of one or several alkoxysilane(s) selected from 3-methacryloxypropyltrimethoxysilane, 3-methacryloxypropyltriethoxysilane, 3-glycidyloxypropyltrimethoxysilane, 3-glycidyloxypropyltriethoxysilane, 3-mercaptopropyltrimethoxysilane, 3-mercaptopropyltriethoxysilane, 2-(3,4-epoxycyclohexyl)ethyl]triethoxysilane, 2-(3,4-epoxycyclohexyl)ethyl]trimethoxysilane, vinyltriethoxysilane and vinyltrimethoxysilane.

3. The ink according to claim 1 or 2, **characterised in that** it contains from 5% (w/w) to 70% (w/w) of prehydrolysed sol-gel resin.

4. The ink according to any one of claims 1 to 3, **characterised in that** the acid contained in the prehydrolysed sol-gel resin is selected from carboxylic acids.

5. The ink according to claim 4, **characterised in that** the acid contained in the prehydrolysed sol-gel resin is selected from formic acid, acetic acid, glycolic acid, chloroacetic acid, acrylic acid, methacrylic acid, propanoic acid, lactic acid, glyoxylic acid, malonic acid, malic acid, maleic acid, 3-acryloyloxypropionic acid, succinic acid, citric acid, acetonedicarboxylic acid, citraconic acid, salicylic acid, mandelic acid and phenylglyoxylic acid.

6. The ink according to any one of claims 1 to 5, **characterised in that** the prehydrolysed sol-gel resin contains form 0.25% (w/w) to 15% (w/w) of acid.

7. The ink according to any one of claims 1 to 6, **characterised in that** the base contained in the prehydrolysed sol-gel resin is selected from tertiary amines.

8. The ink according to claim 7, **characterised in that** the base contained in the prehydrolysed sol-gel resin is selected from dimethylamine, trimethylamine, diethylamine, triethylamine, diethanolamine, triethanolamine, diisopropylamine, diisopropylethylamine, tripropylamine, tris(hydroxymethyl)amine, dibutylamine and phenylethanolamine.

9. The ink according to any one of claims 1 to 8, **characterised in that** the prehydrolysed sol-gel resin contains from 0.5% (w/w) to 15% (w/w) of base.

10. The ink according to any one of claims 1 to 9, **characterised in that** the acid and the base are present in the sol-gel resin in an acid to base molar ratio varying from 15:85 to 85:15.

11. The ink according to any one of claims 1 to 10, **characterised in that** it contains less than 20% (w/w) of solvent.

12. The ink according to any one of claims 1 to 11, **characterised in that** it further contains one or several dispersant(s) selected from polyacrylates or polyurethanes.

13. The ink according to any one of claims 1 to 12, **characterised in that** it further contains a resin or monomer having one or several epoxy, acrylate, methacrylate, vinyl, vinyloxy, hydroxy, thiol, blocked isocyanate, acid and/or acid anhydride function(s).

14. The ink according to any one of claims 1 to 13, **characterised in that** it further contains one or several photo-initiator(s).

15. A use of an ink according to any one of claims 1 to 14 in screen printing on glass, ceramic or metal.
